# EUROPEAN PATENT APPLICATION

(11) **EP 4 471 407 A1**
(43) Date of publication of application: **04.12.2024**
(21) Application number: 24178050.1
(22) Date of filing: 24.05.2024
(51) Int. Cl.: G01N 21/57, G01N 21/88

(54) **AUTOMATIC ADJUSTMENT OF PARAMETERS BASED ON PART SURFACE REFLECTIVE INDEX FOR POINT CLOUD ACQUISITION USING A BLUE LIGHT SCANNER**

(30) Priority: 31.05.2023 US 202318326233
(71) Applicant: PRATT & WHITNEY CANADA CORP., Longueuil, Québec J4G 1A1 (CA)
(72) Inventor: RAHMAN, Mizanur, (01BE5) Longueuil, J4G 1A1 (CA); HOULE, Aime, (01BE5) Longueuil, J4G 1A1 (CA)
(74) Representative: Dehns

(57) **Abstract**

A light source (102) illuminates a part (112) with a light, and a gloss meter (106) measures a surface reflectivity (402) of the part (112) based on a reflection of the light from the part (112). A processor (114) determines a gloss unit for the part (112) based on the surface reflectivity (402), adjusts an acquisition parameter (306) and a processing parameter (308) of the scanning system (100) based on the gloss unit, and scans the part (112) with the imaging device (104) using the acquisition parameter (306) to obtain an image and processes the image with the processing parameter (308) to obtain a point cloud (314).

## Description

### BACKGROUND

Exemplary embodiments pertain to the art of scanning a part for inspection and, in particular, to a method for adjusting an image acquisition parameter and/or an image processing parameter based on a surface reflectivity of the part.

Three-dimensional scanning system are being considered for inspection of parts used in aerospace industries. However, due to the specifications of these parts, high resolution is needed. Scanning includes illuminating the part with light and obtaining an image. Glare due to high surface reflection of the light can obscure details of the part, making it difficult to determine is a defect in an image is due to a defect in the part or a defect in the scanning process. There is therefore a need to be able to adjust scanning methods to avoid the occurrence of surface reflectivity issues.

### SUMMARY

According to an aspect of the present invention, there is a method of scanning a part. The part is illuminated with a light from a light source of a scanning system, wherein the scanning system includes an imaging device. A reflection of the light from the part is obtained. A gloss unit of the light reflected from the part is determined. An acquisition parameter of the scanning system is adjusted based on the gloss unit. An image of the part is obtained at the imaging device using the acquisition parameter.

Optionally, and in accordance with the above, the method further includes determining a gloss range that includes the gloss unit and adjusting the acquisition parameter based on the gloss range.

Optionally, and in accordance with any of the above, the acquisition parameter is at least one of: (i) a part template; (ii) an exposure mode; (iii) an exposure time; (iv) a resolution of the imaging device; (v) a coverage factor; (vi) a coverage detail; (vii) a minimum coverage; (viii) a sensor tilt angle; (ix) a minimum number of line shadows; and (x) a scanning area, (xi) a camera viewing angle, (xii) a maximum number of residuals; (xiii) a scanning mode.

Optionally, and in accordance with any of the above, the method further includes adjusting a processing parameter for an image obtained by the imaging device based on the gloss unit.

Optionally, and in accordance with any of the above, the processing parameter is at least one of: (i) a mesh smoothing parameter; (ii) a thinning parameter; (iii) a triangulation criterion; (iv) an edge optimization; (v) a maximum noise threshold; (vi) a minimum point distance; (vii) a maximum allowable residual.

Optionally, and in accordance with any of the above, the method further includes displaying the gloss unit at an interface and received input at the interface for adjusting the acquisition parameter.

Optionally, and in accordance with any of the above, the method further includes creating a scanning program based on the acquisition parameter.

According to another aspect of the present invention, there is a scanning system, including: a light source for illuminating a part with a light, a gloss meter for measuring a surface reflectivity of the part based on a reflection of the light from the part, an imaging device, and a processor. The processor is configured to determine a gloss unit for the part based on the surface reflectivity, adjust an acquisition parameter of the scanning system based on the gloss unit, and scan the part with the imaging device using the acquisition parameter.

Optionally, and in accordance with any of the above, the processor is further configured to determine a gloss range that includes the gloss unit and adjust the acquisition parameter based on the gloss range.

Optionally, and in accordance with any of the above, the acquisition parameter is at least one of: (i) a part template; (ii) an exposure mode; (iii) an exposure time; (iv) a resolution of the imaging device; (v) a coverage factor; (vi) a coverage detail; (vii) a minimum coverage; (viii) a sensor tilt angle; (ix) a minimum number of line shadows; and (x) a scanning area, (xi) a camera viewing angle, (xii) a maximum number of residuals; (xiii) a scanning mode.

Optionally, and in accordance with any of the above, the processor is further configured to adjust a processing parameter for an image obtained by the imaging device based on the gloss unit.

Optionally, and in accordance with any of the above, the processing parameter is at least one of: (i) a mesh smoothing parameter; (ii) a thinning parameter; (iii) a triangulation criterion; (iv) an edge optimization; (v) a maximum noise threshold; (vi) a minimum point distance; (vii) a maximum allowable residual.

Optionally, and in accordance with any of the above, the processor is further configured to display the gloss unit at an interface and receive input at the interface for adjusting the acquisition parameter.

Optionally, and in accordance with any of the above, the processor is further configured to create a scanning program based on the acquisition parameter.

According to another aspect of the present invention, there is a method of scanning a part. The part is illuminated with a light from a light source of a scanning system, wherein the scanning system includes an imaging device. A reflection of the light from the part is obtained. A gloss unit of the light reflected from the part is determined at a processor. An acquisition parameter and a processing parameter of the scanning system is adjusted at the processor based on the gloss unit. A point cloud is obtained at the processor from an image of the part obtained using the light source and the imaging device operating with the acquisition parameter and the processor operating with the processing parameter.

Optionally, and in accordance with any of the above, the method further includes determining a gloss range that includes the gloss unit and adjusting the acquisition parameter and the processing parameter based on the gloss range.

Optionally, and in accordance with any of the above, the acquisition parameter is at least one of: (i) a part template; (ii) an exposure mode; (iii) an exposure time; (iv) a resolution of the imaging device; (v) a coverage factor; (vi) a coverage detail; (vii) a minimum coverage; (viii) a sensor tilt angle; (ix) a minimum number of line shadows; and (x) a scanning area, (xi) a camera viewing angle, (xii) a maximum number of residuals; (xiii) a scanning mode.

Optionally, and in accordance with any of the above, the processing parameter is at least one of: (i) a mesh smoothing parameter; (ii) a thinning parameter; (iii) a triangulation criterion; (iv) an edge optimization; (v) a maximum noise threshold; (vi) a minimum point distance; (vii) a maximum allowable residual.

Optionally, and in accordance with any of the above, the method further includes displaying the gloss unit at an interface and received input at the interface for adjusting the acquisition parameter.

Optionally, and in accordance with any of the above, the method further includes creating a scanning program based on the acquisition parameter.

### BRIEF DESCRIPTION OF THE DRAWINGS

The following descriptions should not be considered limiting in any way. With reference to the accompanying drawings, like elements are numbered alike:
FIG. 1 shows a scanning system in an illustrative embodiment;
FIG. 2 shows a flowchart of a method of operation for the scanning system, in an embodiment;
FIG. 3 shows a diagram of an automated process for operating the scanning system in an embodiment;
FIG. 4 shows a diagram illustrating various gloss ranges and related parameters, in an illustrative embodiment.

### DETAILED DESCRIPTION

A detailed description of one or more embodiments of the disclosed apparatus and method are presented herein by way of exemplification and not limitation with reference to the Figures.

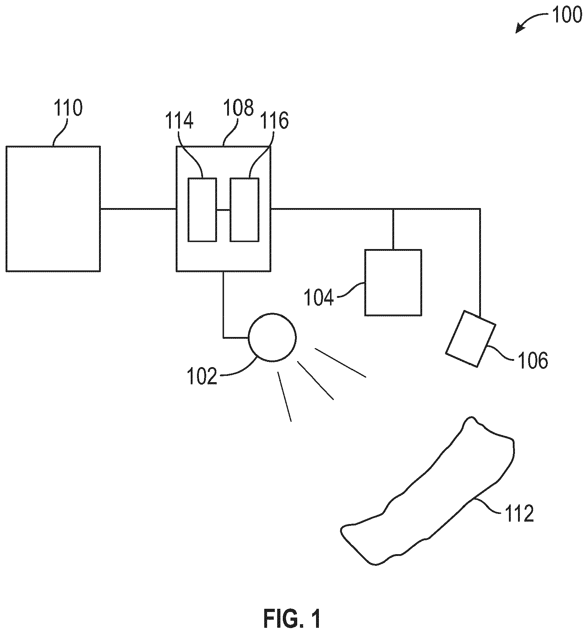

FIG. 1 shows a scanning system 100 in an illustrative embodiment. The scanning system 100 can be a three-dimensional scanning system. The scanning system 100 includes a light source 102, an imaging device 104 or camera (e.g., a digital camera), a light intensity detector or gloss meter 106, a control unit 108 and a human machine interface 110. The light source 102 illuminates a part 112 with light within a selected frequency band and the imaging device 104 records an image of the part 112 being illuminated. The gloss meter 106 can be used record a light intensity of the light reflected from part 112. The light source 102 can produce white light, blue light, structured light, unstructured light, etc. The light source 102, the imaging device 104, and the gloss meter 106 can be moved in space with respect to the part 112 via a suitable device, such as a rail system, a robot arm, etc.

The control unit 108 includes a processor 114 in communication with a computer readable medium 116 or memory storage device that includes programs or instructions to perform the various operations disclosed herein. The processor 114 controls operation of the light source 102 and imaging device 104 to obtain images of the part 112. Additionally, the processor 114 can form a digitized model of the part based on images obtained at the imaging device 104. Forming the digitized model can include determining a point cloud from the reflected light and forming a mesh based on the point cloud. In various embodiments, the control unit 108 can communicate with a human or operator at the human machine interface 110 by presenting information to the operator and receiving input from the operator. This input can be used to control a subsequent scanning operation and/or a subsequent image processing operation.

The processor 114 can also adjust various acquisition parameters used in operation of the light source 102 and of the imaging device 104 as well as processing parameters used in image processing to create the digitized model of the part 112. Acquisition parameters are parameters that control operation of the light source 102, the imaging device 104. Exemplary acquisition parameters include, but are not limited to, a template for a part, an exposure mode for the part, an exposure time for the part, a resolution of the imaging device, a coverage factor, a coverage detail, a minimum coverage, a sensor tilt angle, a minimum number of line shadows (i.e., a minimum number of fringe patterns), a scanning area, a camera viewing angle, a maximum number of residuals (i.e., control noise in the scan data), a scanning mode (e.g., scan everything, activate a scanning option, etc.). Processing parameters are parameters that an image processing operation on the images obtained at the imaging device 104. Exemplary processing parameters include, but are not limited to, a mesh smoothing parameter, a thinning parameter, a triangulation criterion, an edge optimization, a maximum noise threshold, a minimum point distance, and a maximum allowable residual. The processor 114 can adjust these parameters based on a surface quality or surface reflectivity of the part.

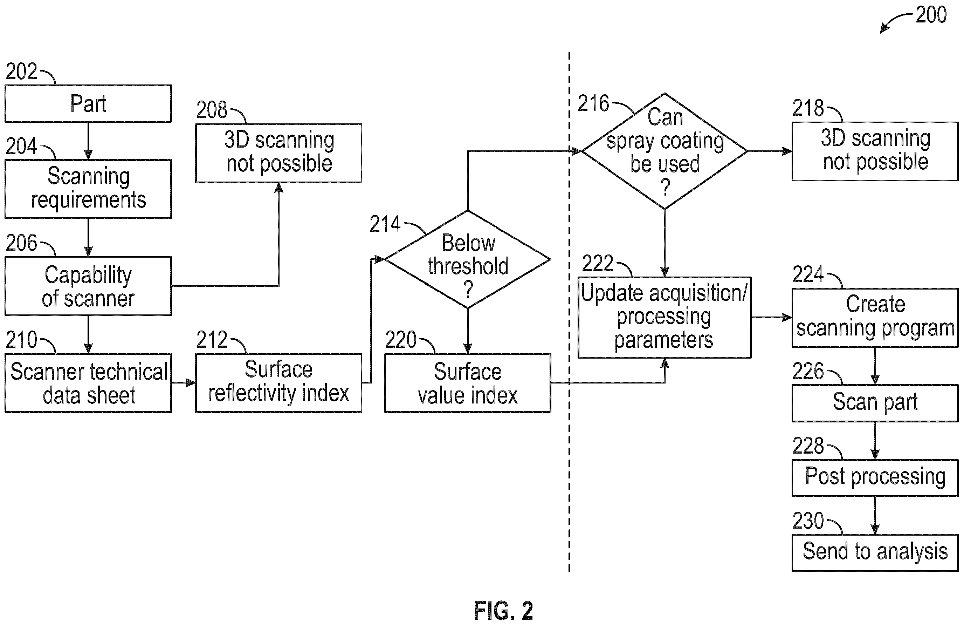

FIG. 2 shows a flowchart 200 of a method of operation for the scanning system 100, in an embodiment. The method includes performing a surface scan of the part 112 using the gloss meter 106, evaluating the surface reflectivity of the part 112, and adjusting at least one of an acquisition parameter and a processing parameter of the scanning system 100 for a subsequent scanning operation.

The method beings at box 202 in which the part 112 is obtained. In box 204, scanning requirements are obtained. In box 206, an evaluation is made as to whether the scanning system 100 is capable of scanning the part 112. The evaluation can include reviewing the part 112 with respect to the scanning requirements, such as size requirements, weight requirements, shape requirements, resolution and accuracy requirements for the part, etc. If the scanning system 100 is not capable of scanning the part 112, the method proceeds to box 208. In box 208, a message can be sent to the operator via the human machine interface 110 to indicate that scanning is not possible. The method can then end.

Returning to box 206, if the scanning system 100 is capable of scanning the part 112, the method proceeds to box 210. In box 210, the part 112 is pre-scanned by illuminating the part 112 with a light from the light source 102 and obtaining a reflection of the light at the gloss meter 106. In box 212, a surface reflectivity index or gloss unit is determined based on the original intensity of the light source 102 and an intensity of the reflected light received at the gloss meter 106. Gloss is a measurement of the amount of light reflected by a surface relative to a standard and is measured in gloss units (GU). In box 214, the gloss of the part 112 is compared to a gloss unit threshold. The comparison can be used to determine adjustments that are to be made to the acquisition parameters and/or the processing parameters. If the gloss unit is greater than or equal to the gloss unit threshold, the method proceeds to box 216. Otherwise, the method proceeds to box 220.

Referring first to box 216, when the gloss unit is greater than the gloss unit threshold, a determination is made of whether a spray coating can be applied to the part in order to reduce the surface reflectivity. This determination is based on various qualities of the spray coating. For example, while the spray coating reduces the surface reflectivity, the thickness of the spray coating can fill in and flatten out angled sections of the part that need to be captured during the scanning process. Thus, the resolution of the part and the desired resolution of the model can be used to determine whether spray coating is a possibility. This determination can be made either by the control unit 108 or by the operator. If it is determined that spray coating cannot be used, the method proceeds to box 218. In box 218, a message can be displayed at the human machine interface to indicate to the operator that the scanning is not possible. The method can end at box 218. Returning to box 216, if the spray coating can be used, the spray coating can be applied and the method proceeds to box 222

Referring now to box 220, if the gloss unit is less than the gloss unit threshold, the gloss unit is compared to various gloss ranges. Based on the gloss range in which the gloss unit resides, the method proceeds to box 222. In box 222, the acquisition parameters and the processing parameters are updated or adjusted. The gloss ranges and the values of acquisition parameters and processing parameters associated with the gloss ranges can be pre-determined.

In box 224, a scanning program is created using the adjusted values of the acquisition parameters. In box 226, a scanning operation is performed on the part using the scanning program to obtain scanning data. In box 228, a post-processing operation is performed on the scanning data to create the digitized model of the part using a processing program using the adjusted values of the processing parameters. In box 230, the digitized model is sent for analysis.

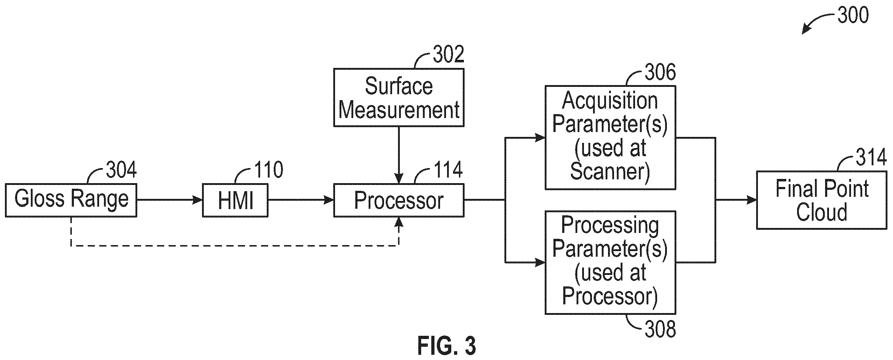

FIG. 3 shows a diagram 300 of an automated process for operating the scanning system 100 in an embodiment. The automated process includes receiving a surface reflectivity measurement 302 from the scanning system 100 at the processor 114. Gloss ranges 304 are also received at the processor 114 via human machine interface 110 or directly from a database. The processor 114 determines values for the acquisition parameters 306 and for the processing parameters 308. The acquisition parameters 306 are sent to the scanning system 100 (e.g., the light source 102, imaging device 104) for performing a subsequent scanning operation. The processing parameters are used at the processor 114 to perform imaging processing that generates a point cloud 314 suitable for generating a digitized model of the part 112.

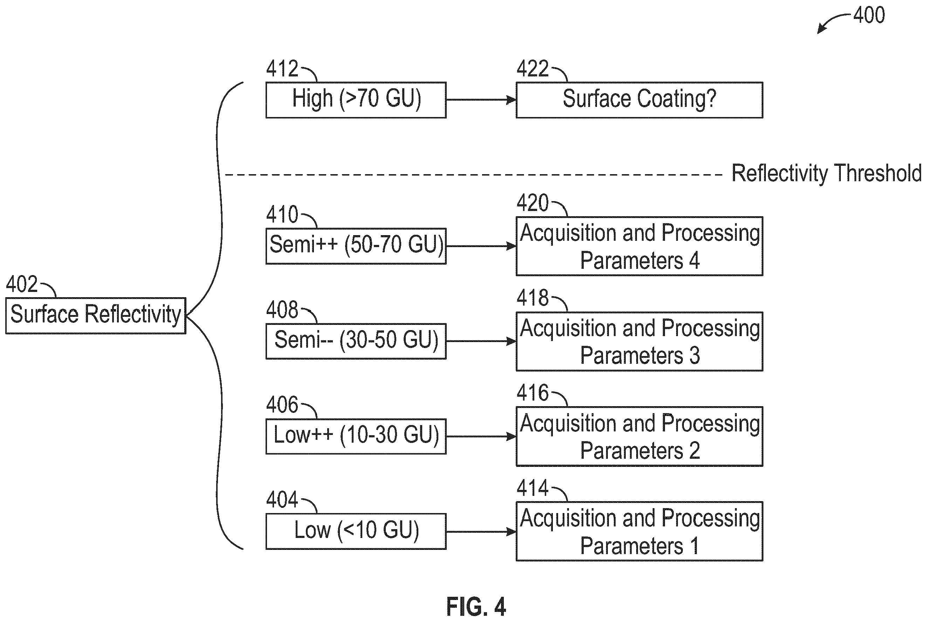

FIG. 4 shows a diagram 400 illustrating various gloss ranges and related parameters, in an illustrative embodiment. The surface reflectivity 402 is compared to various glass unit ranges. When the surface reflectivity 402 is in a first reflectivity range 404 (e.g., less than 10 gloss units (GU)), the processor 114 selects a first set 414 of acquisition parameters and processing parameters. When the surface reflectivity 402 is in a second reflectivity range 406 (e.g., between 10 GU and 30 GU), the processor selects a second set 416 of acquisition parameters and processing parameters. When the surface reflectivity 402 is in a third reflectivity range 408 (e.g., between 30 GU and 50 GU), the processor 114 selects a third 418 set of acquisition parameters and processing parameters. When the surface reflectivity 402 is in a fourth reflectivity range 410 (e.g., between 50 GU and 70 GU), the processor 114 selects a fourth set 420 of acquisition parameters and processing parameters. When the surface reflectivity is in a fifth reflectivity range 412 (e.g., greater than 70 GU), the surface reflectivity is greater than the gloss unit threshold. Thus, the processor 114 makes a determination 422 whether a surface coating is to be used.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A method of scanning a part (112), comprising:
illuminating the part (112) with a light from a light source (102) of a scanning system (100), wherein the scanning system (100) includes an imaging device (104);
obtaining a reflection of the light reflected from the part (112);
determining a gloss unit of the light reflected from the part (112);
adjusting an acquisition parameter (306) of the scanning system (100) based on the gloss unit; and
obtaining an image of the part (112) at the imaging device (104) using the acquisition parameter (306).

2. The method of claim 1, further comprising determining a gloss range that includes the gloss unit and adjusting the acquisition parameter (306) based on the gloss range.

3. The method of claim 1 or 2, further comprising adjusting a processing parameter (308) for an image obtained by the imaging device (104) based on the gloss unit.

4. A scanning system (100), comprising:
a light source (102) for illuminating a part (112) with a light;
a gloss meter (106) for measuring a surface reflectivity (402) of the part (112) based on a reflection of the light from the part (112);
an imaging device (104); and
a processor (114) configured to:
determine a gloss unit for the part (112) based on the surface reflectivity;
adjust an acquisition parameter (306) of the scanning system (100) based on the gloss unit; and
scan the part (112) with the imaging device (104) using the acquisition parameter (306).

5. The scanning system (100) of claim 4, wherein the processor (114) is further configured to determine a gloss range that includes the gloss unit and adjust the acquisition parameter (306) based on the gloss range.

6. The scanning system (100) of claim 4 or 5, wherein the acquisition parameter (306) is at least one of: (i) a part template; (ii) an exposure mode; (iii) an exposure time; (iv) a resolution of the imaging device (104); (v) a coverage factor; (vi) a coverage detail; (vii) a minimum coverage; (viii) a sensor tilt angle; (ix) a minimum number of line shadows; and (x) a scanning area, (xi) a camera viewing angle, (xii) a maximum number of residuals; (xiii) a scanning mode.

7. The scanning system (100) of any of claims 4 to 6, wherein the processor (114) is further configured to display the gloss unit at an interface and receive input at the interface for adjusting the acquisition parameter (306).

8. The scanning system (100) of any of claims 4 to 7, wherein the processor (114) is further configured to create a scanning program based on the acquisition parameter (306).

9. The scanning system (100) of any of claims 4 to 8, wherein the processor (114) is further configured to adjust a processing parameter (308) for an image obtained by the imaging device (104) based on the gloss unit.

10. A method of scanning a part (112), comprising:
illuminating the part (112) with a light from a light source (102) of a scanning system (100), wherein the scanning system (100) includes an imaging device (104);
obtaining a reflection of the light reflected from the part (112);
determining, at a processor (114), a gloss unit of the light reflected from the part (112);
adjusting, at the processor (114), an acquisition parameter (306) and a processing parameter (308) of the scanning system (100) based on the gloss unit; and
obtaining, at the processor (114), a point cloud (314) from an image of the part (112) obtained using the light source (102) and the imaging device (104) operating with the acquisition parameter (306) and the processor (114) operating with the processing parameter (308).

11. The method of claim 10, further comprising determining a gloss range that includes the gloss unit and adjusting the acquisition parameter (306) and the processing parameter (308) based on the gloss range.

12. The method of any of claims 3, 10, or 11, or the scanning system (100) of claim 9, wherein the processing parameter (308) is at least one of: (i) a mesh smoothing parameter; (ii) a thinning parameter; (iii) a triangulation criterion; (iv) an edge optimization; (v) a maximum noise threshold; (vi) a minimum point distance; (vii) a maximum allowable residual.

13. The method of any of claims 1 to 3 or 10 to 12, wherein the acquisition parameter (306) is at least one of: (i) a part template; (ii) an exposure mode; (iii) an exposure time; (iv) a resolution of the imaging device (104); (v) a coverage factor; (vi) a coverage detail; (vii) a minimum coverage; (viii) a sensor tilt angle; (ix) a minimum number of line shadows; and (x) a scanning area, (xi) a camera viewing angle, (xii) a maximum number of residuals; (xiii) a scanning mode.

14. The method of any of claims 1 to 3 or 10 to 13, further comprising displaying the gloss unit at an interface and received input at the interface for adjusting the acquisition parameter (306).

15. The method of claims 1 to 3 or 10 to 14, further comprising creating a scanning program based on the acquisition parameter (306).
